# EUROPEAN PATENT SPECIFICATION

(11) **EP 3 027 290 B1**
(45) Date of publication and mention of the grant of the patent: **18.10.2017**
(21) Application number: 14749960.2
(22) Date of filing: 29.07.2014
(51) Int. Cl.: C02F 1/40, B01D 17/02, B01D 17/04, B01D 17/00, B01D 39/16, C02F 101/32, C02F 1/28

(54) **COALESCENT HYDROCARBON FILTER**
KOALISZIERENDES FILTER FUR KOHLENWASSERSTOFFE
FILTRE COALESCENT POUR HYDROCARBURES

(30) Priority: 02.08.2013 GB 201313913
(43) Date of publication of application: 08.06.2016
(73) Proprietor: Adler and Allan Limited, Harrogate, North Yorkshire HG1 1HQ (GB)
(72) Inventor: CLARKE, Andrew, Brize Norton Oxon OX18 3QQ (GB); SACREE, Richard, New Alresford Hampshire SO24 9BQ (GB)
(74) Representative: Sewell, Adrian David
(86) International application number: PCT/GB2014/052325
(87) International publication number: WO 2015/015192

(56) References cited:
- WO-A1-99/36172
- US-A- 3 554 377
- US-A- 4 857 183
- US-A- 5 061 367
- US-A- 5 354 362
- US-A- 5 811 004
- US-A1- 2012 125 841

## Description

The present invention relates to a filter assembly for a hydrocarbon separator, and to a separator comprising the filter assembly. The filter assembly is for filtering hydrocarbons (oil) including BTEX from water, to enable the water to safely enter drainage systems and/or the water course.

It is known in the art to utilise oil separators which are fitted into surface water drainage systems to protect the environment from pollution by oils. For example, such oil separators are utilised in the forecourts of petrol (gas) stations. The oil separators separate the oil from the water, and retain the oil safely until it is removed. They are installed to contain any run-off oil leaks from vehicles and/or plant machinery and also from accidental spillages. Oil separators are interchangeably known as oil interceptors. As used herein, the term "separator" connotes separators and interceptors. Document WO9936172 discloses a filter assembly suitable for an oil separator. Modern petroleum products are now required to contain a proportion of "biofuel"; for example ethanol (ethyl alcohol) is one such biofuel additive. Ethanol can be mixed with petroleum in relatively low ratios for use in unmodified petrol engines, and with minor modifications petroleum with relatively high ratios of ethanol can be used. Typically, only ethanol is used widely in this manner. It can and has also been mixed with Diesel under the designation of E-Diesel.

Ethanol fuel mixtures have an "E" numbers which describes the percentage of ethanol in the mixture by volume, for example, E85 is 85% anhydrous ethanol and 15% petrol. Petrol is the typical fuel mixed with ethanol but there are other fuel additives that can be mixed, such as an ignition improver used in the E95 Swedish blend. Low ethanol blends, from E5 to E25, are also known as *gasohol,* though internationally the most common use of the term gasohol refers to the E10 blend. Its principle purpose is an oxygenator (replacing MTBE) and to aid in the fuel burning more cleanly in order to reduce carbon dioxide output from fossil fuel utilisation. Biofuel formulations have been selected to replace part, or all, of the conventional hydrocarbon fuels utilised to power vehicles. Currently available Biofuel formulations contain ethanol mixed with conventional fuel formulations, in concentrations up to 85% ^{v}/ᵥ.

While there are some potential environmental benefits from using Biofuel, the negative impact of Biofuel spillages into either the aqueous environment, or traditional protective waste liquid separator systems, contrasts markedly to conventional fuel spillages.

The majority of conventional fuel hydrocarbon component compounds are hydrophobic; thus, when mixed with surplus water, a two phase system is generated - the lower aqueous phase, and the 'oil' phase which being less dense floats on the water. The fuel hydrocarbons are retained within the floating phase; the latter is commonly referred to as the Light Non-Aqueous Phase Liquid (LNAPL). Traditional separators are employed to arrest the flow of fuel spillage into the environment, by physically preventing the 'oil' phase from entering the aqueous waste stream.

Coalescent filters are known in the art that are manufactured to fit into separators. Such coalescent filters work on the principle that when two liquids are immiscible, or not soluble in each other, they can form an emulsion or a colloidal suspension. In these types of mixtures the dispersed liquid (water) forms droplets in the continuous phase (oil or fuel). For instance, in a water/diesel fuel mixture the diesel fuel is the continuous phase and the water will exist as droplets of various sizes.

Traditionally, gravity separators were used in liquid-liquid systems to promote the coalescing of the dispersed phase. In these systems, the differences in the densities of the two liquids cause droplets to rise or fall according to their buoyancy. The greater the differences in densities the easier the separation is, as rising or falling droplets (water) are acted upon by the frictional forces exerted by the viscosity of the continuous phase (oil or diesel fuel). This mechanism is governed by Stoke's Law.

When the movement of the continuous phase (oil or diesel fuel) is slow as in a gravity settler, the effect of the inertial force is reduced and the buoyant force and the gravity force are equal. This is termed as the terminal velocity of the droplet.

A critical factor in a gravity (static) settler is the residence time. It has to be long enough to allow for the passive process of merging smaller droplets into larger ones.

As flat-bed gravity filtration has largely been replaced by vertical constant pressure dynamic filters, the mechanism of works is much more complex. D'Arcy's Principle and complex mathematic algorithms apply and filtration rates vary dependent upon changing viscosities, 'cake' formation, shear dynamics and temperature to name but a few.

Ethanol is extremely water miscible, thus, when ethanolic Biofuel is mixed with water, the ethanol component by preference becomes associated with the aqueous phase. The resultant aqueous ethanol concentration can facilitate the transfer of aromatic hydrocarbons into the aqueous phase, enhancing contaminant concentrations in water, by a process called co-solvency. Since fuel components in the "light non-aqueous phase liquid" (LNAPL) including Benzene, have an affinity for the ethanol/water phase, these components will move into the aqueous phase. This will result in more compounds like benzene, toluene, ethylbenzene, and xylenes in the BTEX family becoming associated with the water phase in known separators and will pass through the existing coalescent filter, unlike pure hydrocarbons. The BTEX will then enter the environment.

In order to comply with environmental legislation, systems must be put in place to prevent discharge of contaminated water resulting from Biofuel additives.

Thus, it is an object of the present invention to provide a filter, and separator system that can remove 'oil' and BTEX from waste water.

As used herein, the term 'oil' refers to hydrocarbons, and especially to hydrocarbons generally used as a power source for automotive internal combustion engines, such as those provided in petrol (gas) stations. The invention is as set out in the independent claim. According to one aspect of the present invention, there is provided a filter assembly for an oil separator, the filter assembly comprising: at least one filter element comprising activated carbon; a filter element comprising a reticulated foam; and a coalescing filter element. In use, the at least one filter element comprising activated carbon is positioned at the downstream end of the filter assembly. The filter assembly is configured to filter oil out of water. For example, the filter assembly may be suitable for filtering run-off water from petrol station forecourts. By providing such a filter assembly, the level of oil, and especially BTEX in the filtered water may be significantly reduced. In use, the coalescing filter element is positioned at the upstream end of the filter assembly. By providing a coalescing filter element at the upstream end of the filter assembly, the oil contained within the water coalesces on the filter. The reduction in oil passing through the coalescing filter may reduce the contamination of the further filter elements which may improve the efficiency of the further filter elements to remove additional compounds such as BTEX over the lifespan of the filter assembly.

The coalescing filter element comprises a reticulated foam.

Preferably, the filter assembly comprises two filter elements comprising activated carbon. In this embodiment, the filter elements are arranged such that a first filter element comprising activated carbon is adjacent to the filter element comprising a reticulated foam, which is also adjacent to a second filter element comprising activated carbon, which is also adjacent to the coalescing filter element.

Providing the filter elements in this order increases the overall filtration efficiency of the filter assembly. It is believed that this order of filters increases the dwell time of the water within the filter elements such that the reduction of the contaminants, and especially BTEX compounds is improved as compared to a filter assembly having a different order of filter elements. Adjacent filter elements abut each other. The adjacent filter elements are preferably adhered to each other. In one embodiment, the filter elements are fused together to form a single filter element. The filter elements are preferably fused together using a polyurethane, moisture curing, adhesive which cross links over 24 hours to form a single filter element.

Preferably, the or each filter element comprising activated carbon, and the filter element comprising a reticulated foam each have a thickness of between about 15 and about 25 mm. More preferably, the or each filter element comprising activated carbon, and the filter element comprising a reticulated foam each have a thickness of between about 17.5 and about 22.5 mm. In a preferred embodiment, the or each filter element comprising activated carbon, and the filter element comprising a reticulated foam each have a thickness of about 20 mm.

The coalescing filter element preferably has a thickness of between about 10 mm and about 20 mm. More preferably, the coalescing filter element has a thickness of between about 12.5 mm and about 17.5 mm. In a preferred embodiment, the coalescing filter element preferably has a thickness of about 15 mm.

The filter assembly preferably has a total thickness of between about 55 mm and about 95 mm. More preferably, the filter assembly preferably has a total thickness of between about 65 mm and about 85 mm. In a preferred embodiment, the total thickness of the filter assembly is about 75 mm. The total thickness of the filter assembly is preferably such that the filter assembly is suitable for use in existing separators without the requirement to modify the separator.

Preferably, the filter element comprising a reticulated foam has a pore size of between about 50 PPI (pores per inch) and about 70 PPI. More preferably, the filter element comprising a reticulated foam has a pore size of between about 55 PPI (pores per inch) and about 65 PPI. In a preferred embodiment, the filter element comprising a reticulated foam has a pore size of about 60 PPI.

Preferably, the coalescing filter element has a pore size of between about 5 PPI and about 15 PPI. More preferably, the coalescing filter element has a pore size of between about 7.5 PPI and about 12.5 PPI. In a preferred embodiment, the coalescing filter element has a pore size of about 10 PPI.

Pores per inch is a measure of pore size which is commonly used in the field. A foam, in essence, is made by the formation of interconnecting bubbles. Each bubble is known as a cell. In the case of reticulated foam, pores are created by the removal of each wall of each cell, leaving behind the boundary edges between the cells to form a net like structure of pores. Determining the number of pores per inch is difficult because some pores will not be visible, e.g., those pores in the vertical plane. The pore size (in PPI) of a foam can be measured by counting, under magnification, the number of cells per cm, and then using a correlation chart to determine the pore size in PPI.

In one embodiment, the filter element, or elements, comprising activated carbon is activated carbon impregnated non-woven fibre material and/or activated carbon impregnated foam. Preferably, when the filter assembly comprises two filter elements comprising activated carbon, a first filter element comprising activated carbon is activated carbon impregnated non-woven fibre material, and a second filter element comprising activated carbon is activated carbon impregnated foam.

The size and number of pores in the activated carbon, in essence, determine the activated carbon's capacity for adsorbing a specific compound. To determine the size and number of pores directly is a difficult process, and so the activated carbon's ability to adsorb a standard reference molecule is determined. In this example, the activated carbon's capacity to adsorb Carbon Tetrachloride is used to determine the properties of the activated carbon. This is commonly called the CTC test, and the result is expressed as a w/w %. The CTC of an activated carbon is determined by flowing CTC laden air through a sample of activated carbon of known weight, under standard conditions, until constant weight is achieved. The apparatus comprises a means to control the supply of air pressure, produce a specified concentration of CTC, and control the flow rate of the air/CTC mixture through the sample. The weight of CTC adsorbed is referred to as the carbon's % CTC activity, and is used as a measure of the amount of activation of the carbon.

Preferably, the activated carbon impregnated on the non-woven fibre material filter element has a CTC activity of between about 65 % and about 70 %. Preferably, the activated carbon impregnated on the foam filter element has a CTC activity of between about 65 % and about 75 %.

The Iodine Number test may be used as an alternative to the CTC activity test. The iodine number is also a parameter used to characterise the performance of activated carbon. Iodine number is a measure of the amount of iodine adsorbed (in mg) in solution by one gram of activated carbon. Thus, the Iodine Number is a measure of the pore volume of the activated carbon. Preferably, the activated carbon impregnated on the non-woven fibre material has an Iodine Number of between about 300mg/g and about 500 mg/g. Preferably, the activated carbon impregnated on the foam filter element has an Iodine Number of between about 300mg/g and about 500 mg/g.

Preferably, the concentration (w/w) of activated carbon impregnated on the non-woven fibre material is between about 10% and about 30 %, more preferably between about 15% and about 25%. In a preferred embodiment, the concentration (w/w) of activated carbon impregnated on the non-woven fibre material is about 20%. Preferably, the concentration (w/w) of activated carbon impregnated on the foam filter element is between about 10% and about 30 %, more preferably between about 15% and about 25%. In a preferred embodiment, the concentration (w/w) of activated carbon impregnated on the foam filter element is about 20%.

Preferably, the activated carbon impregnated on the non-woven fibre material and the activated carbon impregnated on the foam filter element are both derived from coconut husk. Alternatively, activated carbon can be derived from charcoal, nutshells, petroleum pitch , or any other such suitable material.

Preferably, the filter element comprising activated carbon impregnated foam has a pore size of between about 50 PPI and about 70 PPI. More preferably, the filter element comprising activated carbon impregnated foam has a pore size of between about 55 PPI and about 65 PPI. In a preferred embodiment, the filter element comprising activated carbon impregnated foam has a pore size of about 60 PPI.

The filter element comprising a reticulated foam preferably comprises a reticulated polyester foam.

In a preferred embodiment, the filtering elements are annular and are arranged concentrically. The annular filter elements are preferably formed by fusing together the ends of the filter material. The material is preferably fused together using a polyurethane, moisture curing, adhesive which cross links over 24 hours to form the annular filter element. Preferably, the filter is trimmed to size and arranged to form the cylinder, having the required dimensions.

The longitudinal length of the annular filter assembly is between about 315 mm and about 1200 mm. The inner diameter of the annular filter assembly is between about 315mm and about 450mm. The outer diameter of the annular filter assembly is between about 465mm and about 600mm.

The filter elements may be configured such that the filter element at the downstream end of the filter has a relatively high flow resistance as compared to the upstream filter elements. The flow resistance of each filter element may be proportional to the pore size of the filter element. The flow resistances of the activated carbon impregnated foam filter element, and the reticulated foam filter element may be substantially equal. The flow resistance of the coalescent filter element is preferably less than each of the flow resistances of the activated carbon impregnated foam filter element, and the reticulated foam filter element. The flow resistance of the activated carbon impregnated non-woven fibre material filter element is preferably greater than each of the flow resistances of the activated carbon impregnated foam filter element, and the reticulated foam filter element.

Separators normally have a flow rate of about 30 litres per second; the presence of the filter assembly can reduce the flow rate by between about 15% and about 20%.

Without being bound to any particular theory, it is hypothesised that having a filter element at the downstream end of the filter assembly having a relatively high flow resistance as compared to the upstream filter elements, enables the overall flow resistance to be acceptable while increasing the dwell time of the water within the upstream filter elements. As will be appreciated, the flow resistance of the filter assembly is directly related to the maximum flow rate achievable through the filter assembly.

According to a further aspect of the present invention, there is provided an oil separator. The oil separator is for separating oil from water, such as run-off water from a petrol (gas) station forecourt. The separator comprises: a filter assembly as described herein; a settling tank; an inlet; an outlet; and a housing. The filter assembly is coupled to the outlet.

The filter assembly is positioned within the separator such that the coalescing filter element is upstream, and thus as the oil and water flows through the separator, the coalescing filter element is the first filter element to act on the liquid.

The outlet is preferably a pipe extending from within the settling tank. Preferably, at least a portion of the outlet pipe is perforated, and configured to receive the filter assembly. The filter assembly is preferably has an annular cylindrical shape, and is preferably configured to slide over the perforated portion of the outlet pipe.

The separator may be a full-retention separator. The filter assembly is preferably configured to enable a flow rate of up to 65 mm / hour of rainfall on the area to be drained through the separator.

The separator may be a bypass separator. The filter assembly is preferably configured to enable a flow rate of up to 6.5 mm / hour of rainfall on the area to be drained through the separator.

The separator may comprise a storage vessel upstream of the inlet. The storage vessel preferably enables the flow rate through the separator to be reduced during heavy rainfall or the like. In this embodiment, the separator may comprise a low-shear pump positioned between the storage vessel and the inlet.

The separator may comprise a silt separation chamber upstream of the inlet. The silt separation chamber is configured to reduce the amount of silt entering the settling tank.

Where the filter assembly is for a Class 1 type separator as defined in BS EN 858, the filter assembly is preferably configured to achieve a discharge concentration of less than 5 mg/litre of oil.

Where the filter assembly is for a Class 2 type separator as defined in BS EN 858, the filter assembly is preferably configured to achieve a discharge concentration of less than 100 mg/litre of oil.

In use, a filter assembly according to the present invention, used in a separator on a petrol (gas) station forecourt, is preferably configured to have about a three month to about a 6 month service period. As such, gels, or anything that produces a gel is not appropriate. Furthermore, providing PVC plastic beads would be beneficial, but not appropriate for the service period.

Any feature in one aspect of the invention may be applied to other aspects of the invention, in any appropriate combination. In particular, method aspects may be applied to apparatus aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

The invention will be further described, by way of example only, with reference to the accompanying drawings in which:
Figure 1a is a longitudinal cross-sectional view of an embodiment of the filter assembly;
Figure 1b is a transverse cross-sectional view of an embodiment of the filter assembly; and
Figure 2 is a schematic view of an embodiment of the oil separator.

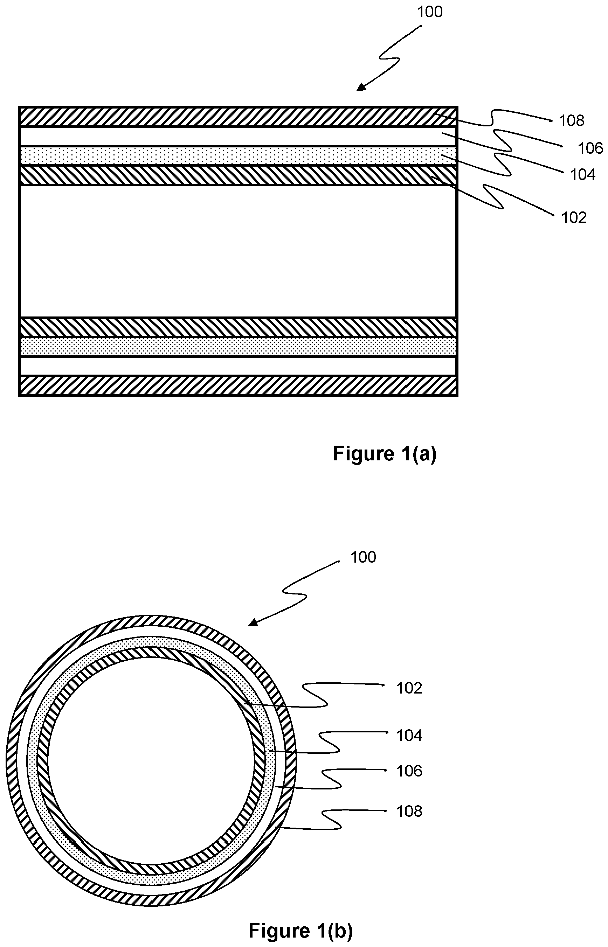

Figures 1a and 1b show the filter assembly 100, having four annular filter elements abutted to each other, and arranged concentrically to form a hollow and cylindrical filter assembly. The filter element 102 comprises an activated carbon impregnated non-woven fibrous material, and has a thickness of about 20mm. The filter element 104 comprises a reticulated polyester foam material having a pore size of about 60 PPI, and a thickness of about 20 mm. The filter element 106 comprises an activated carbon impregnated polyester foam, having a pore size of about 60 PPI, and a thickness of about 20 mm. The filter element 108 is a coalescing filter element, comprising a reticulated polyether foam, having a pore size of about 10 PPI, and a thickness of about 15 mm. The filter elements are arranged such that the filter element 102 is adjacent to the filter element 104, which is also adjacent to the filter element 106, which is also adjacent to the filter element 108.

In one example, the filter elements are made from the following materials.

### Filter element 102 - Activated Carbon impregnated non-woven fibre

The needled nonwoven polyester fibre is manufactured in 4 steps. The fibres are first spun, cut to shorter lengths, and put into bales. The staple fibres are then blended, (opened) in a multistep process, dispersed on a conveyor belt, and spread in a uniform web using a carding/crosslapping process. The fibres are bonded together using resins. One side of the fibre is needled to compress and increase the weight/density on the surface.

These fibre rolls then undergo an impregnation process, whereby the activated carbon formulation is incorporated onto the fibre at the required addition level. The formulation includes acrylic latex binders and processing aids/liquid phase stability additives. The fibre is then cut into sheets, having the required dimensions for further processing.

### Filter element 104 - Reticulated polyester foam

The foam is manufactured in a 3 stage process. In the first stage, a flexible foam is produced in rectangular form by a continuous process known as slab stock foaming. The foam is manufactured by the controlled reaction of polyester polyols, toluene di-isocyanate (TDI), water, catalysts, surfactants, pigment, and other minor additives as directed by the processing conditions/end use. The ingredients are metered continuously into a mixing head.

In the second stage, the mixed reactants, still in liquid form, are poured onto a continuous moving paper lined conveyor. As the reaction proceeds, the foam rises due to the generation of carbon dioxide (CO₂) within the mixture, thus producing a continuous foam block up to 60m in length. The reactants continue to cross link, and after a few minutes, gas generation ceases, although the cross linking continues for several hours. The foam block generates heat within the block until it is fully cured.

In the third stage, the foam block is transferred onto a loop slitting machine, which in effect, rolls a 60m sheet taken from the block. The roll is then transferred to a reticulation vessel, to remove most cell walls in the foam, yielding approximately a 100% open cell structure. During the reticulation process, all cell walls are opened mechanically by means of an explosion. The foam is filled with hydrogen and oxygen, and a controlled explosion removes all of the cell walls from the foam. The resulting open structure makes reticulated foam suitable as a filter material. The roll of foam is then cut into sheets, having the required dimensions for further processing.

### Filter element 106 - Reticulated polyester foam impregnated with Activated Carbon

This is produced by the same process as filter element 104 with the additional process of impregnation according to the process described for filter element 102.

### Filter element 108 - Polyether coalescing filter foam

This is produced using the same process as for filter element 104, but the base chemicals are polyether based as opposed to polyester based. The foam is cut into shorter blocks, having dimensions of approximately 2mx1mx0.5m, which are then reticulated in the same process as described above. This foam is slit/sheeted off for further processing/lamination.

These specific filter material may be obtained from Vita Cellular Foams (UK) Ltd - http://www.vitecuk.com/.

The filter assembly 100 has a total thickness of about 75 mm, allowing it to be used in existing oil separators, which conform to European Standard BS EN 858-1:2002 and BS EN 858-2:2003, without modifying the separator.

Initial filter materials chosen were based on known specific properties of filtration by those materials.

Laboratory bench top tests were conducted on individual samples to check the efficiency in removal of ethanol and BTEX elements from known aliquots of pre-mixed sample solutions of known petroleum composition. The tests were then repeated using serial diluted samples. Base samples were taken and used as the zero point to determine removal rates.

Further experiments were conducted using sequential combinations of filter materials and flow directions alternated to determine if material order affected the filtration properties.

Based on the analytical results of the lab bench tests, the best combinations were further tested using a scaled version of a separator filter rig. Fluid through-put from pre-mixed sample solutions of known petroleum-water composition were used throughout the testing procedures. Fluid samples were taken prior to filtration and prior to each filtration sequence to be used as the null points.

As can be seen below, three filter assemblies were tested based on the above described test results. It was found that the thickness of the filter elements made a surprisingly large effect on the filtration efficiency of the filter assembly.

**Table 1**

| **Example No.** | **Filter material** | **Thickness of each filter element (mm)** | **Percentage reduction of base water sample containing a mixture of ethanolic fuel (Ethanol and various BTEX hydrocarbons)** |
|---|---|---|---|
| 1. | Activated carbon impregnated non-woven fibre | 10 | 44 |
| | Reticulated foam (60 PPI) | 10 | |
| | Activated carbon impregnated foam (60 PPI) | 10 | |
| | Coalescent foam (10 PPI) | 45 | |
| 2. | Activated carbon impregnated non-woven fibre | 15 | 46 |
| | Reticulated foam (60 PPI) | 15 | |
| | Activated carbon impregnated foam (60 PPI) | 15 | |
| | Coalescent foam (10 PPI) | 30 | |
| 3. | Activated carbon | 20 | 89.6 |
| | impregnated non-woven fibre | | |
| | Reticulated foam (60 PPI) | 20 | |
| | Activated carbon impregnated foam (60 PPI) | 20 | |
| | Coalescent foam (10 PPI) | 15 | |

Example 3 in Table 1 is the preferred filter assembly.

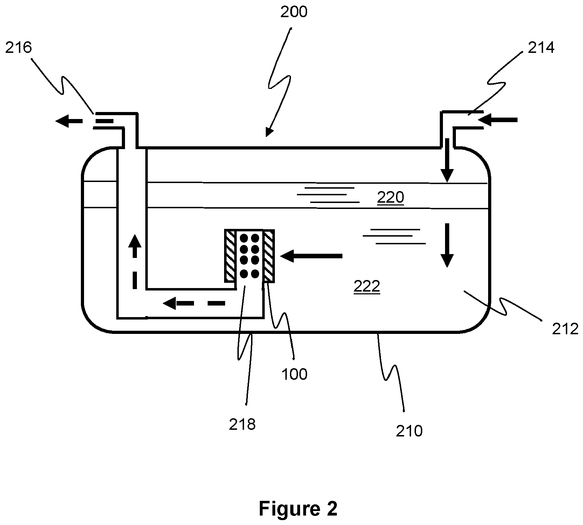

Figure 2 shows an oil separator 200 comprising a housing 210; a settling tank 212; an inlet 214; an outlet 216; a pipe 218 having a perforated portion; and the filter assembly 100. Figure 2 indicates a sectional view of the filter assembly 100. The filter assembly 100 is positioned inside the settling tank 212, and is coupled to the outlet 216 via the pipe 218. The filter element 102 abuts the perforated portion of the pipe 218.

During use, the oil separator 200 is positioned underground and the settling tank 212 is partially filled with water 222. Contaminated water (indicated by solid arrows) from above ground enters the inlet 214 and mixes with the water 222 already present in the settling tank 212. Contaminated water may contain a mixture of water, ethanol and hydrophobic compounds such as oils, petrol, diesel and BTEX compounds (benzene, toluene, ethylbenzene, and xylenes). Over time, the hydrophobic compounds, such as hydrocarbons, coalesce and form a layer 220. However, ethanol present in the contaminated water can draw BTEX compounds into the aqueous phase, preventing the BTEX compounds separating, and moving into the layer 220.

The filter assembly 100 is positioned such that the coalescing filter element 108 is situated on the outside of the filter assembly and as such is positioned at the upstream end of the filter assembly. The contaminated water first contacts the coalescing filter 108, which removes hydrophobic contaminants, such as oils and other hydrocarbons, for example petrol and diesel. The remaining contaminated water, containing ethanol and BTEX compounds, passes through the filter elements 106, 104 and 102. The combination of the filter elements 106, 104 and 102 removes BTEX compounds from the contaminated water. Filtered water (indicated by dashed arrows), passes into the perforated pipe 218, and exits the separator through the outlet 216.

It is desired that the filter achieves a level of BTEX compounds in the resulting filtered water that is compliant with the Environmental Quality Standards Directive 2008/105/EC and the Water Framework Directive (2000/60/EC). The filter assembly 100 can remove sufficient BTEX compounds to result in filtered water having a total concentration of BTEX compounds as low as 1 ppm.

The filter assembly is designed to treat contaminated water at a range of flow rates up to and including the flow rate generated by a rainfall of 65 mm /hour. The filtering assembly 100 is designed to retain the contaminated water for sufficient time to allow for substantial removal of BTEX compounds. As will be appreciated, the above mentioned limit on the total thickness of the filter assembly and the required flow rate, constrains the filter assembly design.

The combination of filter elements, having substantially the above thicknesses and pore sizes, enable retention of contaminated water in the filter for a long enough period to remove BTEX compounds to the required level, while at the same time allowing the filter to operate at the range of flow rates mentioned above. The exact mechanism for BTEX removal is not presently known; activated carbon is likely to adsorb the BTEX compounds; however, the presence of all four filter elements is necessary to achieve removal of BTEX compounds as well as other hydrocarbons. In particular, the combination of particular thicknesses, pore size and the order in which the filter elements are arranged are all critical. Further, the effectiveness of the filter assembly at removing BTEX compounds is highly surprising and unexpected, as is demonstrated in the examples. As can be seen, the efficiency of the filter elements does not scale linearly as might be expected. It is thought that the increased retention (dwell) time of the contaminated water within the filter is a factor in this unexpected result.

The oil separator 200 may be a Class 1 or Class 2 type separator and may be a full retention, bypass or forecourt type separator.

Class 1 separators are designed to achieve a discharge concentration of less than 5 mg/litre of oil under standard test conditions. These separators are required for discharges to surface water drains and the water environment. Many Class 1 separators contain coalescing devices, which draw the oil droplets together and facilitate the separation.

Class 2 separators are designed to achieve a discharge concentration of less than 100 mg/litre of oil under standard test conditions. They are suitable for dealing with discharges where a lower quality requirement applies such as discharges to the foul sewer.

Both classes can be produced as 'full retention', 'bypass' or 'forecourt' separators. Full retention separators treat the full flow that can be delivered by the drainage system. The 'full flow' is normally equivalent to the flow generated by a rainfall intensity of 65 mm/hour.

Full retention separators are used where there is a risk of regular contamination with oil and a foreseeable risk of significant spillages, for example, vehicle maintenance areas and retail fuel forecourts.

On large sites, some short-term storage upstream of the separator might be an acceptable means of limiting the flow rate and the size of separator needed. Any surface water stored cannot be pumped through the separator unless the separator is specifically designed to receive pumped inflows and a low-shear, non-emulsifying pump is used.

Bypass separators fully treat all flows, for the area served, generated by rainfall rates of up to 6.5 mm/hour. This covers most rainfall events. Flows above this rate are allowed to bypass the separator. These separators are used when it is considered an acceptable risk not to provide full treatment for high flows, e.g. where only small spillages can occur and the risk of spillage is small, such as in short stay car parks. In cases where a large spillage might occur, it is not acceptable to use a by-pass separator. The only exception to this is a major trunk road where the size and type of spillage is impossible to foresee and the surface area drained makes it impractical to provide a full retention separator. For major trunk roads, a sustainable urban drainage system (SUDS) approach incorporating a number of SUDS techniques is likely to be more appropriate.

On sites where high levels of silt are likely to enter the separator, the build up of silt must not be allowed to compromise the operation of either the separator or the by-pass device. On such sites (e.g. major trunk roads and quarries) an adequately sized silt separation chamber should be installed upstream of the separator and appropriate management systems put in place to monitor the situation and remove the silt when necessary. The use of SUDS techniques can minimise the amount of silt in the surface water run-off.

Forecourt means all forms of liquid-fuel dispensing outlets, both retail and non-retail, including those where only diesel is dispensed. A forecourt separator must be a 'full retention' separator, large enough to serve the catchment area of the site and have a sufficient oil storage volume to retain any foreseeable spillages.

It is important to install a forecourt separator of an appropriate size. On a forecourt where tanker deliveries are received, a separator with an oil storage capacity of 7,600 litres will meet the requirements of BS EN 858-2, clause 4.3.6. If a smaller unit is proposed, the size should be determined by undertaking a risk assessment incorporating catchment size, potential spillages during delivery, and other risks such as safety issues. If the compartment size of the tanker that delivers to the site is greater that 7,600 litres the separator should be sized accordingly.

## Claims

1. A filter assembly (100) for positioning in a settling tank of an oil separator to remove BTEX compounds from contaminated water, the filter assembly (100) comprising a plurality of filter elements abutted to each other and arranged concentrically to form a hollow and cylindrical filter assembly, comprising:
at least one first filter element (102) comprising activated carbon;
a filter element (104) comprising a reticulated foam; and
a coalescing filter element (108),
wherein the at least one first filter element (102) comprising activated carbon is positioned innermost and at a downstream end of the filter assembly (100) and the coalescing filter element (108) is situated on the outside of the filter assembly (100) and at an upstream end of the filter assembly (100).

2. A filter assembly (100) according to claim 1, wherein the plurality of filter elements are arranged such that the filter element (104) comprising a reticulated foam (104) is positioned in between and adjacent to the first filter element (102) comprising activated carbon and a second filter element (106) comprising activated carbon which is positioned adjacent to the coalescing filter element (108).

3. A filter assembly (100) according to claim 2, wherein the or each filter element comprising activated carbon and the filter element (104) comprising a reticulated foam each have a thickness of between about 15 mm and about 25 mm.

4. A filter assembly (100) according any preceding claim, wherein the coalescing filter element (108) has a thickness of between about 10 mm and about 20 mm.

5. A filter assembly (100) according to any preceding claim, wherein the filter assembly (100) has a total thickness of between about 40 mm and about 95 mm.

6. A filter assembly (100) according to any preceding claim, wherein the filter element comprising a reticulated foam (104) has a pore size of between about 50 PPI and about 70 PPI.

7. A filter assembly (100) according to any preceding claim, wherein the coalescing filter element (108) has a pore size of between about 5 PPI and about 15 PPI.

8. A filter assembly (100) according to any preceding claim, the at least one first filter element (102) comprises activated carbon impregnated non-woven fibre material.

9. A filter assembly (100) according to claim 2 or 3 and claim 8, wherein the second filter element (106) comprises activated carbon impregnated foam.

10. A filter assembly (100) according to claim 9, wherein the second filter element (106) comprising activated carbon impregnated foam has a pore size of 60 PPI.

11. A filter assembly (100) according to claim 9 or 10, wherein the concentration of activated carbon in the activated carbon impregnated non-woven fibre material is between about 15% and about 25%; and the concentration of the activated carbon in the activated carbon impregnated foam is between about 15% and about 25%.

12. A filter assembly (100) according to any preceding claim, wherein the filter element (104) comprising a reticulated foam comprises a reticulated polyester foam.

13. A filter assembly (100) according to any preceding claim, wherein the coalescing filter element (108) comprises a reticulated foam.

14. An oil separator (200) for removing BTEX compounds from contaminated water, comprising:
a filter assembly (100) according to any preceding claim;
a settling tank (212);
an inlet (214);
an outlet (216); and
a housing (210),
wherein the filter assembly (100) is positioned in the settling tank (212) and coupled to the outlet (216).

## Patentansprüche

1. Eine Filterbaugruppe (100) zur Positionierung in einem Absetztank eines Ölabscheiders zum Entfernen von BTEX-Verbindungen aus verunreinigtem Wasser, wobei die Filterbaugruppe (100) eine Vielzahl von Filterelementen beinhaltet, die aneinander anstoßen und konzentrisch angeordnet sind, um eine hohle und zylinderförmige Filterbaugruppe zu bilden, die Folgendes beinhaltet:
mindestens ein erstes Filterelement (102), das Aktivkohle beinhaltet;
ein Filterelement (104), das einen vernetzten Schaum beinhaltet; und
ein koaleszierendes Filterelement (108),
wobei das mindestens eine erste Filterelement (102), das Aktivkohle beinhaltet, am weitesten im Innern und an einem stromabwärts liegenden Ende der Filterbaugruppe (100) positioniert ist und das koaleszierende Filterelement (108) sich an der Außenseite der Filterbaugruppe (100) und an einem stromaufwärts liegenden Ende der Filterbaugruppe (100) befindet.

2. Filterbaugruppe (100) gemäß Anspruch 1, wobei die Vielzahl von Filterelementen so angeordnet sind, dass das Filterelement (104), das einen vernetzten Schaum (104) beinhaltet, zwischen und neben dem ersten Filterelement (102), das Aktivkohle beinhaltet, und einem zweiten Filterelement (106), das Aktivkohle beinhaltet, positioniert ist, das neben dem koaleszierenden Filterelement (108) positioniert ist.

3. Filterbaugruppe (100) gemäß Anspruch 2, wobei das oder jedes Filterelement, das Aktivkohle beinhaltet, und das Filterelement (104), das einen vernetzten Schaum beinhaltet, jeweils eine Dicke zwischen etwa 15 mm und etwa 25 mm aufweist.

4. Filterbaugruppe (100) gemäß einem vorhergehenden Anspruch, wobei das koaleszierende Filterelement (108) eine Dicke zwischen etwa 10 mm und etwa 20 mm aufweist.

5. Filterbaugruppe (100) gemäß einem vorhergehenden Anspruch, wobei die Filterbaugruppe (100) eine Gesamtdicke zwischen etwa 40 mm und etwa 95 mm aufweist.

6. Filterbaugruppe (100) gemäß einem vorhergehenden Anspruch, wobei das Filterelement, das einen vernetzten Schaum (104) beinhaltet, eine Porengröße zwischen etwa 50 PPI und etwa 70 PPI aufweist.

7. Filterbaugruppe (100) gemäß einem vorhergehenden Anspruch, wobei das koaleszierende Filterelement (108) eine Porengröße zwischen etwa 5 PPI und etwa 15 PPI aufweist.

8. Filterbaugruppe (100) gemäß einem vorhergehenden Anspruch, wobei das mindestens eine erste Filterelement (102) aktivkohleimprägniertes Vliesstoffmaterial beinhaltet.

9. Filterbaugruppe (100) gemäß Anspruch 2 oder 3 und Anspruch 8, wobei das zweite Filterelement (106) aktivkohleimprägnierten Schaum beinhaltet.

10. Filterbaugruppe (100) gemäß Anspruch 9, wobei das zweite Filterelement (106), das aktivkohleimprägnierten Schaum beinhaltet, eine Porengröße von 60 PPI aufweist.

11. Filterbaugruppe (100) gemäß Anspruch 9 oder 10, wobei die Konzentration der Aktivkohle in dem aktivkohleimprägnierten Vliesstoffmaterial zwischen etwa 15 % und etwa 25 % beträgt; und die Konzentration der Aktivkohle in dem aktivkohleimprägnierten Schaum zwischen etwa 15 % und etwa 25 % beträgt.

12. Filterbaugruppe (100) gemäß einem vorhergehenden Anspruch, wobei das Filterelement (104), das einen vernetzten Schaum beinhaltet, einen vernetzten Polyesterschaum beinhaltet.

13. Filterbaugruppe (100) gemäß einem vorhergehenden Anspruch, wobei das koaleszierende Filterelement (108) einen vernetzten Schaum beinhaltet.

14. Ein Ölabscheider (200) zum Entfernen von BTEX-Verbindungen aus verunreinigtem Wasser, der Folgendes beinhaltet:
eine Filterbaugruppe (100) gemäß einem vorhergehenden Anspruch;
einen Absetztank (212);
einen Einlass (214);
einen Auslass (216); und
ein Gehäuse (210),
wobei die Filterbaugruppe (100) in dem Absetztank (212) positioniert und mit dem Auslass (216) gekoppelt ist.

## Revendications

1. Ensemble filtre (100) destiné à être positionné dans un décanteur d'un séparateur d'huile afin d'éliminer les composés BTEX d'une eau contaminée, l'ensemble filtre (100) comprenant une pluralité d'éléments de filtre placés bout-à-bout et agencés concentriquement pour former un ensemble filtre creux et cylindrique, comprenant :
au moins un premier élément de filtre (102) comprenant du charbon actif ;
un élément de filtre (104) comprenant une mousse réticulée ; et
un élément de filtre coalescent (108),
dans lequel l'au moins un premier élément de filtre (102) comprenant du charbon actif est positionné le plus à l'intérieur et au niveau d'une extrémité aval de l'ensemble filtre (100) et l'élément de filtre coalescent (108) est situé sur l'extérieur de l'ensemble filtre (100) et au niveau d'une extrémité amont de l'ensemble filtre (100).

2. Ensemble filtre (100) selon la revendication 1, dans lequel la pluralité d'éléments de filtre est agencée de telle sorte que l'élément de filtre (104) comprenant une mousse réticulée (104) soit positionné entre le premier élément de filtre (102) comprenant du charbon actif, adjacent à celui-ci, et un second élément de filtre (106) comprenant du charbon actif qui est positionné adjacent à l'élément de filtre coalescent (108).

3. Ensemble filtre (100) selon la revendication 2, dans lequel le ou chaque élément de filtre comprenant du charbon actif et l'élément de filtre (104) comprenant une mousse réticulée ont chacun une épaisseur entre environ 15 mm et environ 25 mm.

4. Ensemble filtre (100) selon l'une quelconque des revendications précédentes, dans lequel l'élément de filtre coalescent (108) a une épaisseur entre environ 10 mm et environ 20 mm.

5. Ensemble filtre (100) selon l'une quelconque des revendications précédentes, dans lequel l'ensemble filtre (100) a une épaisseur totale entre environ 40 mm et environ 95 mm.

6. Ensemble filtre (100) selon l'une quelconque des revendications précédentes, dans lequel l'élément de filtre comprenant une mousse réticulée (104) a une taille de pore entre environ 50 PPI et environ 70 PPI.

7. Ensemble filtre (100) selon l'une quelconque des revendications précédentes, dans lequel l'élément de filtre coalescent (108) a une taille de pore entre environ 5 PPI et environ 15 PPI.

8. Ensemble filtre (100) selon l'une quelconque des revendications précédentes, l'au moins un premier élément de filtre (102) comprend un matériau de fibre tissé imprégné de charbon actif.

9. Ensemble filtre (100) selon la revendication 2 ou 3 et la revendication 8, dans lequel le second élément de filtre (106) comprend une mousse imprégnée de charbon actif.

10. Ensemble filtre (100) selon la revendication 9, dans lequel le second élément de filtre (106) comprenant une mousse imprégnée de charbon actif a une taille de pore de 60 PPI.

11. Ensemble filtre (100) selon la revendication 9 ou 10, dans lequel la concentration de charbon actif dans le matériau de fibre non tissé imprégné de charbon actif est comprise entre environ 15% et environ 25% ; et la concentration de charbon actif dans la mousse imprégnée de charbon actif est comprise entre environ 15% et environ 25%.

12. Ensemble filtre (100) selon l'une quelconque des revendications précédentes, dans lequel l'élément de filtre (104) comprenant une mousse réticulée comprend une mousse de polyester réticulée.

13. Ensemble filtre (100) selon l'une quelconque des revendications précédentes, dans lequel l'élément de filtre coalescent (108) comprend une mousse réticulée.

14. Séparateur d'huile (200) destiné à éliminer les composés BTEX d'une eau contaminée, comprenant :
un ensemble filtre (100) selon l'une quelconque des revendications précédentes ;
un décanteur (212) ;
une entrée (214) ;
une sortie (216) ; et
un boîtier (210),
dans lequel l'ensemble filtre (100) est positionné dans le décanteur (212) et couplé à la sortie (216).
